# EUROPEAN PATENT APPLICATION

(11) **EP 4 296 048 A1**
(43) Date of publication of application: **27.12.2023**
(21) Application number: 22755951.5
(22) Date of filing: 03.02.2022
(51) Int. Cl.: B32B 9/00, B32B 27/40, C09K 3/00, B32B 7/02

(54) **LAYERED FILM**

(30) Priority: 16.02.2021 JP 2021022823
(71) Applicant: TOYOBO CO., LTD., Osaka-shi Osaka 5300001 (JP)
(72) Inventor: YAMAZAKI, Atsushi, Inuyama-shi, Aichi 484-8508 (JP)
(74) Representative: Vossius & Partner Patentanwälte Rechtsanwälte mbB
(86) International application number: PCT/JP2022/004238
(87) International publication number: WO 2022/176630

(57) **Abstract**

The present invention addresses the problem of providing a layered film formed by including, on a substrate film layer in which a polyester resin is used, an inorganic thin film layer and a protective layer in that order, the layered film having outstanding moist heat resistance, alcohol resistance, film production recoverability, and barrier anisotropy, and also having outstanding recyclability which allows the layered film and a sealant layer to be simply peeled away from a laminated layered body. The solution is a layered film that comprises an inorganic thin film layer on at least one side of a substrate film, and comprises, on the inorganic thin film layer, a protective layer that contains a urethane resin with a meta-xylylene base, the layered film being characterized by satisfying the following requirements (a)-(d). (a) No covering layer is layered between the substrate film and the inorganic thin film layer. (b) The ratio B/A of the water vapor transmission rate B of the protective layer when water vapor passes through from the protective layer side, to the water vapor transmission rate A thereof when water vapor passes through from the substrate film side, at 40°C and 90% RH, is 2.0 or less. (c) The ratio (P2/P1) of the peak intensity (P2) with an absorption maximum in the 1530±10cm⁻¹ range on the surface of the protective layer after the layered film is immersed for ten minutes in 95°C hot water and then a tape is affixed to and then peeled away from the surface of the protective layer, to the peak intensity (P1) with an absorption maximum in the 1530±10/cm⁻¹ range on the total reflection infrared absorption spectrum of the protective layer, is at least 0.7. (d) The ratio (P2/P1) of the peak intensity (P2) with an absorption maximum in the 1530±10/cm⁻¹ range on the surface of the protective layer after the layered film is immersed for one hour in 99% ethanol and then a tape is affixed to and then peeled away from the surface of the protective layer, to the peak intensity (P1) with an absorption maximum in the 1530±10/cm⁻¹ range on the total reflection infrared absorption spectrum of the protective layer, is at least 0.7.

## Description

### TECHNICAL FIELD

The present invention relates to a layered film used in the packaging field of food products, pharmaceutical products, industrial products, and the like. More specifically, the present invention relates to a layered film including an inorganic thin film layer and a protective layer on a substrate film layer in this order without a covering layer, which is excellent in moist-heat resistance, formed film collectability, and barrier anisotropy, and is excellent in recyclability so that the layered film and a sealant layer can be easily peeled off from a laminated body.

### BACKGROUND ART

Packaging materials used for food products, pharmaceutical products and the like are required to be equipped with a property of blocking gases such as oxygen and water vapor, namely, gas barrier properties in order to suppress the oxidation of proteins and fats, to maintain the taste and freshness, and to maintain the efficacy of pharmaceutical products. Gas barrier materials used for electronic devices such as solar cells and organic EL, electronic parts, and the like are required to exhibit higher gas barrier properties than packaging materials for food products.

Hitherto, in food applications that require blocking of various gases such as water vapor and oxygen, gas barrier layered bodies in which metal thin films formed of aluminum and the like and inorganic thin films formed of inorganic oxides such as silicon oxide and aluminum oxide are formed on the surface of substrate films formed of plastics are generally used. Among these, those in which thin films (inorganic thin film layers) of inorganic oxides such as silicon oxide, aluminum oxide, and a mixture thereof are formed on the surface of base material films are widely used since these gas barrier layered bodies are transparent and the contents are visible.

However, the aforementioned inorganic thin film layer is susceptible to physical/chemical damage from the outside, and as a result, there is a problem that the barrier performance and adhesive properties decrease. As a method for covering decreases in performance, a method in which a covering layer is laminated between the inorganic thin film layer and the substrate or a method in which a protective layer is laminated on the inorganic thin film layer is generally employed. With regard to the former, for example, it has been reported that adhesive properties and water resistance are improved by providing a covering layer formed of an oxazoline group-containing water-soluble polymer between the substrate and the inorganic thin film layer (see, for example, Patent Document 1). Meanwhile, with regard to the latter, for example, there is a method in which an inorganic thin film is coated with a water-soluble polymer, an inorganic layered compound and a metal alkoxide or a hydrolysate thereof, and a highly crosslinked product of an inorganic substance containing an inorganic layered compound and the water-soluble polymer is formed on the inorganic thin film by a sol-gel method (for example, Patent Document 2). These methods can be expected to protect the vapor-deposition layer from external loads as well as improve the gas barrier performance.

As described above, by providing a covering layer, an inorganic thin film layer, and a protective layer as coating layers, it is possible to realize a gas barrier film that is resistant to external loads and can maintain barrier properties and adhesive properties. However, there is a concern that a gas barrier film having multi-layer coating configuration composed of different materials may become a demerit from the perspective of promoting recycling/low environmental load accompanying the tightening of regulations on the reduction of single-use plastics, which has become the subject of global debate in recent years. For example, lamination of a covering layer having a crosslinked structure is greatly effective in exerting adhesion performance and water resistance, but aggregates derived from the covering layer are mixed into the film as foreign substances, and in some cases, cause troubles of film breakage during film formation when it is attempted to collect the non-product part of the substrate film composed of thermoplastic resin, re-melt/re-form the non-product part into a film in the film forming process. In a case where an aromatic compound is used for the covering layer, the film after being re-formed may be colored. The same can be said for the protective layer, and for example, problems arise that chlorine gas is generated by melting at high temperatures when a gas barrier film in which polyvinylidene chloride is laminated on an olefin film is collected/melted, and an increase in viscosity during extrusion makes it difficult to perform extrusion. In the sol-gel method as well, there is a problem that foreign substances are likely to be generated depending on the degree of crosslinking.

In this way, there has been no particular discussion about recyclability until now as long as the performance is guaranteed. However, considering the current situation where the problem of single-use plastic disposal is becoming more serious, the present inventors have found that in the future, it will be necessary to design products that fully consider the recyclability of the laminated coating layers themselves.

The present inventors have found that, with regard to the environmental aspect, sufficient consideration is required to be given not only to the coating layers but also to the laminated bodies. Generally, in a case where a gas barrier film is used as a packaging bag, since the heat resistance of substrate itself, toughness (bag breakage resistance and pinhole resistance) depending on contents, and sealing properties for forming into a packaging body are also simultaneously required in addition to barrier properties and adhesive properties, a single gas barrier film cannot satisfy all of these performances. Therefore, for example, in packaging bodies for retorting, a configuration of two or more films obtained by dry-laminating a barrier polyester film on the outside of the bag, a polyamide film as an intermediate layer if necessary, and an olefin-based heat sealable resin on the inside (content side) using an adhesive is general. The laminated body having these different configurations has high adhesive properties that can withstand use, which makes it difficult to peel/separate materials when the layered body becomes waste after use. In this case, it is impossible to reuse the layered body (material recycle) as plastic, and the layered body is conventionally burned as thermal recycle for a waste treatment. However, due to growing awareness of environmental problems in recent years, it is desired to realize a laminated body composed of a single material with recyclability, that is, a monomaterial configuration. For example, studies have been conducted in which an inorganic thin film layer is applied to a polyester-based sealant to exert barrier performance and sealability with one layer (see, for example, Patent Document 3). However, there is a problem that it is difficult for the current monomaterial configuration to satisfy all of the performances required.

On the other hand, the quality required for barrier film packaging is becoming more and more diversified. For example, boiling/retorting is common as the treatment for sterilizing the contents in food packaging. However, in recent years, hot pack (hot filling), which is for heating beverages to 90°C or more and filling and cooling the beverages and can sterilize the inside of a container by filling heated food or beverages in the container, is adopted in some cases. In this case, since the film is momentarily exposed to high temperature and high humidity, a barrier film exhibiting moist-heat resistance is required in uses other than retorting as well. In the case of being used for non-food packaging such as antiseptic solutions and cosmetics, gas barrier films that are resistant to alcohol and solvents that are the contents are required.

In general, the moist-heat resistance and solvent resistance tend to be improved by improving the crosslinking density of the coating layer and suppressing the swelling/dissolution of the barrier layer itself, but there is a tradeoff from the viewpoint of easy collectability of the coating layer.

In recent years, there has been an increasing number of cases where barrier films are required not to have anisotropy. For example, in the case of the aforementioned use for cosmetics and the like, the water vapor barrier performance from the inside to the outside of the bag is important in order to prevent the contents with high volatility from depleting. However, in general, oxygen barrier properties prevent permeation of oxygen from the outside to the inside of the bag, and it is required that the barrier performance is exerted on any permeable surface. With regard to this, for example, polyvinyl alcohol, which is a general barrier resin, is highly dependent on humidity, and has different barrier performances in a case of being exposed to a high humidity environment (the inside of the bag in a case where the contents are liquid) and a case of not being exposed (the outside of the bag). In other words, anisotropy occurs.

The problem of anisotropy can be improved by diminishing the amount of hydrophilic groups in the barrier layer through a crosslinking reaction or by diminishing the amount of hydrophilic groups introduced and lowering the humidity dependence, but it is insufficient in some cases. crosslinking also tends to deteriorate the absolute value of barrier performance. Furthermore, the introduction of a crosslinked structure is not preferable from the viewpoint of easy collectability of the coating layer described above.

In view of the background, the present inventors have focused on a low environmental load type gas barrier film that has sufficient durability for expected uses, is excellent in barrier performance (particularly anisotropy), is easily collectable, and is also excellent in recyclability as a laminated body.

### PRIOR ART DOCUMENTS

### PATENT DOCUMENTS

Patent Document 1: JP-B-5560708
Patent Document 2: JP-A-2000-43182
Patent Document 3: WO 2019/187970

### SUMMARY OF THE INVENTION

### PROBLEMS TO BE SOLVED BY THE INVENTION

In Patent Documents 1 and 2, barrier performance and adhesive properties after retorting has been described but recyclability of the layered film and recyclability of the laminated body after use have not been studied. In Patent Document 3, durability of the contents and recyclability have not been studied. In Patent Document 4, barrier properties are insufficient and barrier anisotropy and content resistance have not been studied.

The present invention has been devised in view of the problems of the conventional techniques.

In other words, the present invention is to provide a layered film including an inorganic thin film layer and a protective layer on a substrate film layer formed using a polyester resin in this order, which is excellent in moist-heat resistance, alcohol resistance, formed film collectability, and barrier anisotropy, and is excellent in recyclability so that the layered film and a sealant layer can be easily peeled off from a laminated body.

### MEANS FOR SOLVING THE PROBLEMS

The present inventors have made it possible to easily collect the substrate film by using a polyester resin not having a covering layer as a substrate. By laminating a specific barrier protective layer on an inorganic thin film layer, it is possible to obtain a layered film that is excellent in moist-heat adhesive properties and barrier anisotropy and also exhibits alcohol resistance without a covering layer. Furthermore, the present inventors have found that the layered film can be easily peeled off from a laminated body by utilizing the property that the adhesive properties of the protective layer decreases when the laminated body is boiled in boiling water for a certain period of time, and have completed the present invention.

In other words, the present invention has the following configuration.
(1) A layered film including an inorganic thin film layer on at least one surface of a substrate film and a protective layer containing a urethane resin having a meta-xylylene group on the inorganic thin layer, in which the layered film satisfies the following requirements (a) to (d) :
   (a) a covering layer is not laminated between the substrate film and the inorganic thin film layer,
   (b) a ratio A/B of a water vapor transmission rate A of the protective layer when water vapor permeates from a substrate film side to a water vapor transmission rate B of the protective layer when water vapor permeates from a protective layer side at 40°C and 90% RH is 2.0 or less,
   (c) a ratio (P2/P1) of a peak intensity (P2) having an absorption maximum in a region of 1530 ± 10 cm⁻¹ on a protective layer surface after the layered film is immersed in hot water at 95°C for 10 minutes and then tape is pasted to the protective layer surface and peeled off to a peak intensity (P1) having an absorption maximum in a region of 1530 ± 10 cm⁻¹ in a total reflection infrared absorption spectrum of the protective layer is 0.7 or more, and
   (d) a ratio (P2/P1) of a peak intensity (P2) having an absorption maximum in a region of 1530 ± 10 cm⁻¹ on a protective layer surface after the layered film is immersed in 99% ethanol for 1 hour and then tape is pasted to the protective layer surface and peeled off to a peak intensity (P1) having an absorption maximum in a region of 1530 ± 10 cm⁻¹ in a total reflection infrared absorption spectrum of the protective layer is 0.7 or more.
(2) The layered film according to (1), in which an oxygen transmission rate of the layered film at 23°C and 65% RH is 10 ml/m²·d·MPa or less.
(3) The layered film according to (1) or (2), in which a meta-xylylene group content in the urethane resin that has a meta-xylylene group and is contained in the protective layer is 12% to 33% by mass, and an amount of silanol groups is 700 to 1700 mg per 1 kg of resin constituting the polyurethane resin as an amount of Si element contained in the silanol groups.
(4) The layered film according to any one of (1) to (3), in which the inorganic thin film layer is an aluminum oxide layer or a layer of a composite oxide composed of silicon oxide and aluminum oxide.
(5) A laminated body obtained by laminating a sealant layer on one surface of the layered film according to any one of (1) to (4).
(6) The laminated body according to (5), in which the laminated body has a lamination strength of 0.5 N/15 mm or less after boiling sterilization in hot water at 90°C for 2 hours.

### EFFECT OF THE INVENTION

According to the invention of this application, it is possible to provide a layered film that is excellent in moist-heat resistance, alcohol resistance, formed film collectability, and barrier anisotropy, and is excellent in recyclability so that the layered film and a sealant layer can be easily peeled off from a laminated body by fabricating a layered film including an inorganic thin film layer and a protective layer on a substrate film layer formed using a polyester resin in this order. Moreover, the layered film of the present invention does not depend on the materials and can ensure stable quality under a wide range of manufacturing conditions in processing processes such as printing and lamination as well, so is excellent in both economic efficiency and production stability, and can provide a gas barrier film with uniform properties.

### MODE FOR CARRYING OUT THE INVENTION

Hereinafter, the present invention will be described in detail.

### [Substrate film]

As the substrate film (hereinafter referred to as "substrate film" in some cases) used in the present invention, for example, it is possible to use a film obtained by melt-extruding a plastic, and if necessary, stretching the extruded product in the machine direction and/or the transverse direction, cooling the stretched product, and heat-setting the stretched product. Examples of the plastic include polyvinyl chloride, polyvinylidene chloride, polyvinyl alcohol, wholly aromatic polyamide, polyamideimide, polyimide, polyetherimide, polysulfone, polystyrene, and polylactic acid in addition to polyamides typified by nylon 4/6, nylon 6, nylon 6/6, and nylon 12; polyesters typified by polyethylene terephthalate, polybutylene terephthalate, and polyethylene-2,6-naphthalate; and polyolefins typified by polyethylene, polypropylene, and polybutene. Among these, polyester is preferable from the viewpoint of heat resistance, dimensional stability, and transparency, and polyethylene terephthalate and copolymers obtained by copolymerizing polyethylene terephthalate with other components are particularly preferable.

As the substrate film, a film having an arbitrary thickness can be used depending on the desired purpose and uses such as mechanical strength and transparency. The film thickness is not particularly limited, but is usually recommended to be 5 to 250 µm, and is desirably 10 to 60 µm in the case of using the layered film as a packaging material.

The transparency of the substrate film is not particularly limited, but the light transmittance of the substrate film is desirably 50% or more in the case of using the layered film as a packaging material required to exhibit transparency.

The substrate film may be a single-layer type film formed of one kind of plastic, or may be a laminated type film in which two or more kinds of plastic films are laminated. The kind, lamination number, lamination method, and the like of the layered body in the case of forming a laminated type film are not particularly limited, and can be arbitrarily selected from known methods depending on the purpose.

The substrate film may be subjected to surface treatments such as a corona discharge treatment, a glow discharge treatment, a flame treatment, and a surface roughening treatment and also subjected to known anchor coating treatment, printing, decoration, and the like as long as the object of the present invention is not impaired.

A covering layer is not laminated on the substrate film of the present invention. The substrate is thus formed of a single material, and the film can be easily collected/reused after film formation. In a case where a covering layer is present, the collected film may be colored, foreign substances may be generated, or film breakage may occur.

### [Inorganic thin film layer]

The gas barrier layered film of the present invention has an inorganic thin film layer on the surface of the substrate film layer. The inorganic thin film layer is a thin film formed of a metal or an inorganic oxide. The material for forming the inorganic thin film layer is not particularly limited as long as the material can be formed into a thin film. From the viewpoint of gas barrier properties, preferable examples thereof include inorganic oxides such as silicon oxide (silica), aluminum oxide (alumina), and a mixture of silicon oxide and aluminum oxide. In this composite oxide, with regard to the mixing ratio of silicon oxide to aluminum oxide, the metal mass ratio of Al is preferably in a range of 20% to 70% by mass. When the Al concentration is less than 20% by mass, the water vapor barrier properties may decrease. Meanwhile, when the Al concentration is more than 70% by mass, the inorganic thin film layer tends to be hard, the film may be broken during secondary processing such as printing and lamination, and the gas barrier properties may decrease. When the Al concentration is 100% by mass, the water vapor barrier performance is favorable, but the inorganic thin film layer is formed of a single material, so the surface of the inorganic thin film layer tends to be smooth, the inorganic thin film layer has poor slipperiness, and defects (wrinkles/acnes and the like) in processing are likely to be generated. The silicon oxide used herein is various silicon oxides such as SiO and SiO₂ or a mixture thereof, and the aluminum oxide used herein is various aluminum oxides such as AlO and Al₂O₃ or a mixture thereof.

The thickness of the inorganic thin film layer is usually 1 to 100 nm, preferably 5 to 50 nm. When the thickness of the inorganic thin film layer is less than 1 nm, it may be difficult to obtain satisfactory gas barrier properties. On the other hand, when the thickness is more than 100 nm and is excessively thick, the effect of improving the gas barrier properties corresponding to the excessive thickness is not obtained, and it is rather disadvantageous from the viewpoint of flex resistance and production cost. From the viewpoint of recyclability as well, the subsequent collection process may be adversely affected when the film thickness is too thick.

The method for forming the inorganic thin film layer is not particularly limited, and known vapor deposition methods, for example, physical vapor deposition methods (PVD methods) such as a vacuum vapor deposition method, a sputtering method, and an ion plating method, or chemical vapor deposition methods (CVD methods) may be appropriately adopted. Hereinafter, a typical method for forming the inorganic thin film layer will be described by taking a silicon oxide/aluminum oxide-based thin film as an example. For example, in the case of adopting the vacuum vapor deposition method, a mixture of SiO₂ and Al₂O₃, a mixture of SiO₂ and Al, or the like is preferably used as a vapor deposition raw material. Usually, particles are used as these vapor deposition raw materials. In this case, the size of each particle is desirably a size that does not change the pressure during vapor deposition, and the preferable particle size is 1 mm to 5 mm. For heating, systems such as resistive heating, high frequency induction heating, electron beam heating, and laser heating can be adopted. It is also possible to adopt reactive vapor deposition by introducing oxygen, nitrogen, hydrogen, argon, carbon dioxide gas, water vapor or the like as a reaction gas or using a means such as ozone addition or ion assist. The film forming conditions can also be arbitrarily changed so that a bias is applied to the body to be vapor-deposited (layered film to be subjected to vapor deposition) or the body to be vapor-deposited is heated or cooled. The vapor deposition materials, the reaction gases, the application of a bias to the body to be vapor-deposited, the heating/cooling, and the like can be similarly changed in the case of adopting a sputtering method and a CVD method as well.

### [Protective layer]

In the present invention, a protective layer is provided on the inorganic thin film layer. The metal oxide layer is not a completely dense film and has dotted microscopic deficient portions. By applying a specific resin composition for protective layer to be described later onto the metal oxide layer to form a protective layer, a resin in the resin composition for protective layer invades the deficient portions of the metal oxide layer, and as a result, an effect of stabilizing the gas barrier properties or improving the adhesive properties between the substrate and the inorganic thin film layer and the inorganic thin film layer and the protective layer is obtained. Additionally, by using a material exhibiting gas barrier properties in the protective layer itself as well, the gas barrier performance of the layered film can also be greatly improved.

The protective layer of the present invention contains a polyurethane resin having a meta-xylylene group. The meta-xylylene group content in the polyurethane resin is preferably in a range of 12% to 33% by mass. As the meta-xylylene group content is 12% by mass or more, favorable gas barrier properties can be exerted.

Furthermore, it is preferable to have a silanol group in the urethane resin. In this case, the amount of silanol groups is 700 to 1700 mg per 1 kg of resin constituting the polyurethane resin as the amount of Si element contained in the silanol groups. When the amount of silanol groups is within the above range, favorable interfacial close contact properties with the metal oxide layer, which is an inorganic thin film, is exhibited. Since the resin itself retains flexibility, the protective layer has an excellent ability to relax stress, and can maintain adhesive strength to the substrate without a layer such as a covering layer. Furthermore, by promoting partial self-crosslinking by silanol groups, it is possible to form a film that is less likely to swell with alcohol or water and to avoid a decrease in adhesion of the protective layer accompanying immersion in hot water/alcohol. Since the protective layer has a partially crosslinked structure, the adhesive strength decreases when hot water treatment is performed for a certain period of time or longer, the film can be easily peeled off from the laminated body, and a film excellent in recyclability can be obtained.

Next, the constituent components of the resin composition for protective layer for forming the protective layer will be described in detail.

### (Polyurethane resin (E))

The dispersion containing a polyurethane resin (E) of the present invention (hereinafter referred to as the polyurethane resin (E)-containing dispersion) is obtained by dispersing a polyurethane resin (aqueous polyurethane resin) in water, and the polyurethane resin is obtained by reacting an isocyanate group-terminated prepolymer with a chain extender.

The isocyanate group-terminated prepolymer is obtained by reacting a polyisocyanate component with a polyol component.

The polyisocyanate component contains a xylylene diisocyanate as an essential component. Examples of xylylene diisocyanate (XDI) include 1,2-xylylene diisocyanate (o-XDI), 1,3-xylylene diisocyanate (m-XDI), and 1,4-xylylene diisocyanate (p-XDI) that are structural isomers.

These xylylene diisocyanates can be used singly or in combination of two or more kinds thereof. Preferred examples of xylylene diisocyanate include 1,3-xylylene diisocyanate and 1,4-xylylene diisocyanate, and more preferred examples thereof include 1,3-xylylene diisocyanate.

By containing a xylylene group, particularly a 1,3-xylylene group (meta-xylylene group), high gas barrier properties can be exerted. The meta-xylylene group content in the polyurethane resin (E) is, as described above, 12% to 33% by mass. By setting the meta-xylylene group within the above range, balance between the gas barrier properties and the flexibility of the polyurethane resin (E) can be favorably maintained. The meta-xylylene group content is more preferably 14% to 32% by mass, particularly preferably 16% to 32% by mass.

The polyisocyanate component can also contain other polyisocyanates, if necessary. Examples of the other polyisocyanates include tolylene diisocyanate (2,4- or 2,6-tolylene diisocyanate or mixtures thereof) (TDI), phenylene diisocyanate (m-, p-phenylene diisocyanate or mixtures thereof), 1,5-naphthalenediisocyanate (NDI), diphenylmethane diisocyanate (4,4'-, 2,4'- or 2,2'-diphenylmethane diisocyanate or mixtures thereof) (MDI), tetramethylxylylene diisocyanate (1,3- or 1,4-tetramethylxylylene diisocyanate or mixtures thereof) (TMXDI), 1,6-hexamethylene diisocyanate (also known as hexamethylene diisocyanate) (HDI), hydrogenated xylylene diisocyanate (also known as bis(isocyanatomethyl)cyclohexane) (H6XDI), 3-isocyanatomethyl-3,5,5-trimethylcyclohexyl isocyanate (also known as isophorone diisocyanate) (IPDI), and methylene bis(cyclohexyl isocyanate) (also known as bis(isocyanatocyclohexyl)methane) (4,4'-, 2,4'- or 2,2'-methylenebis(cyclohexyl isocyanate), trans,trans-form, trans,cis-form, or cis,cis-form thereof, or mixture thereof) (H12MDI).

These other polyisocyanates can be used singly or in combination of two or more kinds thereof. Preferred examples thereof include araliphatic polyisocyanates and alicyclic polyisocyanates, and more preferred examples thereof include alicyclic polyisocyanates.

The polyol component contains a diol having 2 to 6 carbon atoms and a carboxyl group-containing polyol as essential components.

The diol having 2 to 6 carbon atoms is an organic compound having 2 to 6 carbon atoms and two hydroxyl groups. Specific examples thereof include alkanediols having 2 to 6 carbon atoms (alkylene glycol having 2 to 6 carbon atoms) such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, and 1,3- or 1,4-cyclohexanediol; and ether diols having 2 to 6 carbon atoms such as diethylene glycol, triethylene glycol and dipropylene glycol.

These diols having 2 to 6 carbon atoms can be used singly or in combination of two or more kinds thereof.

Preferred examples of the diol having 2 to 6 carbon atoms include alkanediols having 2 to 6 carbon atoms, and more preferred examples thereof include ethylene glycol.

Examples of the carboxyl group-containing polyol include polyhydroxyalkanoic acids such as 2,2-dimethylolacetic acid, 2,2-dimethylollactic acid, 2,2-dimethylolpropionic acid (also known as dimethylolpropionic acid), 2,2-dimethylolbutanoic acid, 2,2-dimethylolbutyric acid, and 2,2-dimethylolvaleric acid, and preferred examples thereof include 2,2-dimethylolpropionic acid.

The polyol component can also contain other polyol compounds (excluding the diols having 2 to 6 carbon atoms and carboxyl group-containing polyols described above) as an arbitrary component.

Examples of the other polyol compounds include trihydric or higher low molecular weight polyols such as trimethylolpropane and glycerin, for example, polyether polyols, polyester polyols, polycarbonate polyols, polycaprolactone polyols, polyolefin polyols, and acrylic polyols.

These polyol compounds (excluding the diols having 2 to 6 carbon atoms and carboxyl group-containing polyols described above) can be used singly or in combination of two or more kinds thereof.

Polyhydroxyalkanoic acid is blended so that the acid value of resin solids is preferably 5 to 40 mg KOH/g, more preferably 10 to 30 mg KOH/g, still more preferably 15 to 25 mg KOH/g.

In order to synthesize the isocyanate group-terminated prepolymer, the respective components are blended at a proportion of more than 1, preferably at a proportion of 1.1 to 10 in equivalent ratio (isocyanate group/active hydrogen group) of isocyanate groups to active hydrogen groups (hydroxyl group and amino group). The respective components are reacted by known polymerization methods such as bulk polymerization and solution polymerization, preferably solution polymerization, which allows easier adjustment of reactivity and viscosity.

In bulk polymerization, for example, the components are blended in a nitrogen atmosphere and reacted at a reaction temperature of 75°C to 85°C for about 1 to 20 hours.

In solution polymerization, for example, the components are blended in an organic solvent (solvent) in a nitrogen atmosphere and reacted at a reaction temperature of 20°C to 80°C for about 1 to 20 hours.

Examples of the organic solvent include acetone, methyl ethyl ketone, ethyl acetate, tetrahydrofuran, and acetonitrile, which are inert to isocyanate groups and highly hydrophilic.

In the polymerization, for example, a reaction catalyst such as an amine-based, tin-based, or lead-based catalyst may be added, if necessary.

For example, in a case where an anionic group is contained, preferably a neutralizing agent is added to neutralize the anionic group and form a salt of the anionic group.

Examples of the neutralizing agent include conventional bases, for example, organic bases (for example, tertiary amines (trialkylamines having 1 to 4 carbon atoms such as trimethylamine and triethylamine; alkanolamines such as dimethylethanolamine, methyldiethanolamine, triethanolamine, and triisopropanolamine; and the like)), and inorganic bases (ammonia, alkali metal hydroxides (lithium hydroxide, sodium hydroxide, potassium hydroxide, and the like), alkaline earth metal hydroxides (magnesium hydroxide, calcium hydroxide, and the like), and alkali metal carbonates (sodium carbonate, potassium carbonate, and the like)). These bases can be used singly or in combination of two or more kinds thereof.

The neutralizing agent is added at a proportion of 0.4 equivalents or more, preferably 0.6 equivalents or more per 1 equivalent of the anionic group, and is added at a proportion of, for example, 1.2 equivalents or less, preferably 1 equivalent or less per 1 equivalent of the anionic group.

The isocyanate group-terminated prepolymer obtained in this manner is a polyurethane prepolymer having two or more free isocyanate groups at its molecular terminals, and the isocyanate group content (isocyanate group content in terms of solids excluding solvent) is, for example, 1.0% by mass or more and 10% by mass or less.

Next, in this method, the isocyanate group-terminated prepolymer thus obtained is reacted with a chain extender, for example, in water to obtain a polyurethane resin-containing dispersion.

The chain extender contains an alkoxysilyl compound having an amino group as an essential component.

Examples of the alkoxysilyl compound having an amino group include N-β(aminoethyl)γ-aminopropyltrimethoxysilane (also known as N-2-(aminoethyl)-3-aminopropyltrimethoxysilane), N-β(aminoethyl)γ-aminopropyltriethoxysilane (also known as N-2-(aminoethyl)-3-aminopropyltriethoxysilane), N-β(aminoethyl)γ-aminopropylmethyldimethoxysilane (also known as N-2-(aminoethyl)-3-aminopropylmethyldimethoxysilane), and N-β(aminoethyl)γ-aminopropylmethyldiethoxysilane (also known as N-2-(aminoethyl)-3-aminopropylmethyldiethoxysilane).

These alkoxysilyl compounds having an amino group can be used singly or in combination of two or more kinds thereof.

The chain extender may contain other polyamines (polyamines excluding alkoxysilyl compounds having an amino group) as an arbitrary component in a range in which the excellent effects of the present invention are not impaired.

Examples of the other polyamines include 4,4'-diphenylmethanediamine, 1,3- or 1,4-xylylenediamine or mixtures thereof, 3-aminomethyl-3,5,5-trimethylcyclohexylamine (also known as isophoronediamine), 4,4'-dicyclohexylmethanediamine, 1,3- and 1,4-bis(aminomethyl)cyclohexane and mixtures thereof, ethylenediamine, 1,6-hexamethylenediamine, hydrazine (including hydrates), 2-((2-aminoethyl)amino)ethanol (also known as N-(2-aminoethyl)ethanolamine), and 2-((2-aminoethyl)amino)-1-methylpropanol (also known as N-(2-aminoethyl)isopropanolamine).

These other polyamines can be used singly or in combination of two or more kinds thereof. Preferred examples of the other polyamines include aminoalcohols.

The chain extender is preferably composed of an alkoxysilyl compound having an amino group and an aminoalcohol.

The amount of the alkoxysilyl compound having an amino group blended is preferably in a range to be 700 to 1700 mg, more preferably 900 to 1500 mg, still more preferably 1100 to 1300 mg as Si content per 1 kg of resin solids.

In order to react the isocyanate group-terminated prepolymer with the chain extender in water, for example, the isocyanate group-terminated prepolymer is first dispersed in water by adding the isocyanate group-terminated prepolymer to water, a chain extender is then added thereto to conduct chain elongation of the isocyanate group-terminated prepolymer with the chain extender.

In order to disperse the isocyanate group-terminated prepolymer in water, the isocyanate group-terminated prepolymer is added while water is stirred at a proportion of 100 to 1,000 parts by mass of water to 100 parts by mass of the isocyanate group-terminated prepolymer.

After that, the chain extender is added dropwise to the water in which the isocyanate group-terminated prepolymer is dispersed while stirring is performed at a proportion so that the equivalent ratio (active hydrogen group/isocyanate group) of the active hydrogen group (amino group and hydroxyl group) of the chain extender to the isocyanate group of the isocyanate group-terminated prepolymer becomes, for example, 0.6 to 1.2.

The chain extender is reacted by being added dropwise, and after the dropwise addition is completed, the reaction is completed at, for example, room temperature while stirring is further performed. The reaction time until completion of the reaction is, for example, 0.1 hours or more and, for example, 10 hours or less.

In this method, if necessary, the organic solvent and water can be removed and water can be added to adjust the solid concentration.

The solid concentration in the obtained polyurethane resin-containing dispersion is, for example, 10% by mass or more, preferably 15% by mass or more, more preferably 20% by mass or more, and is, for example, 60% by mass or less, preferably 50% by mass or less, more preferably 45% by mass or less.

As a method for introducing silanol groups into the protective layer, a method in which a silane coupling agent and the like are post-added is also known. However, in the present invention, it has been found that introduction of silanol groups into the urethane resin skeleton has a greater effect on barrier properties and adhesive properties than the post-addition method. In the case of the post-addition method, there is a possibility that the work is complicated and the measurement of the amount added is erroneous. On the other hand, by containing a silanol group in the polyurethane dispersion skeleton in advance, there is an advantage that the above-mentioned complication and erroneousness can be prevented.

When the amount of silanol groups contained in the polyurethane resin (E) is less than 700 mg per 1 kg of resin constituting the polyurethane resin (E) as the amount of Si element contained in the silanol groups, the formation of crosslinked structure becomes insufficient, and this causes decreases in water-resistant close contact properties and gas barrier properties. Swelling with respect to alcohol also becomes insufficient.

When the amount of silanol groups contained is more than 1700 mg per 1 kg of resin constituting the polyurethane resin (E) as the amount of Si element contained in the silanol groups, too many crosslinked structures are formed, the flexibility of the protective layer is impaired, and this causes deterioration of the metal oxide layer and decreases in flex resistance. Furthermore, there is a risk that aggregates are likely to be formed when the present film is collected and recycled.

In a case of forming the protective layer from a resin composition for protective layer, a coating liquid (application liquid) containing the polyurethane resin, deionized water, and a water-soluble organic solvent may be prepared, applied, and dried. As the water-soluble organic solvent, a single or mixed solvent selected from alcohols such as ethanol and isopropyl alcohol (IPA), ketones such as acetone and methyl ethyl ketone, and the like can be used, and IPA is preferable from the viewpoint of coating film processing and odor.

The coating method of the resin composition for protective layer is not particularly limited as long as it is a method for coating the film surface to form a layer. For example, ordinary coating methods such as gravure coating, reverse roll coating, wire bar coating and die coating can be adopted.

The applied amount when the resin composition for protective layer is applied is not particularly limited, but is preferably in a range of 0.05 to 1.0 g/m² in a dry state. From the viewpoint of practicality, the applied amount is more preferably in a range of 0.10 to 0.50 g/m², still more preferably 0.15 to 0.35 g/m². It is difficult to obtain sufficient close contact properties, gas barrier properties, and protective effects when the applied amount is less than 0.05 g/m², and it tends to be disadvantageous in terms of cost when the applied amount is 1.0 g/m² or more.

When the protective layer is formed, it is preferable to perform heating and drying after the resin composition for protective layer is applied. The drying temperature at that time is preferably 110°C to 210°C, more preferably 120°C to 200°C, still more preferably 130°C to 190°C. When the drying temperature is less than 110°C, the protective layer may be insufficiently dried, or crosslinking of the protective layer may not progress and the close contact properties may decrease. Meanwhile, when the drying temperature is more than 210°C, the film is excessively heated, and the film may be brittle, or the film may shrink and the processability may be poor. It is particularly preferable that the solvent is first volatilized at a relatively low temperature of 90°C to 110°C immediately after application of the protective film and then drying is performed at 150°C or more since a uniform film is obtained. Apart from drying, it is also effective to perform an additional heat treatment in a temperature region as low as possible to advance crosslinking of the protective layer.

### [Packaging material]

In the laminated body of the present invention, it is necessary to use a heat-sealable resin layer called a sealant layer. The heat-sealable resin layer is usually provided on the inorganic thin film layer, but may be provided on the outside of the substrate film layer (the surface opposite to the covering layer forming surface). The heat-sealable resin layer is usually formed by an extrusion lamination method or a dry lamination method. As a thermoplastic polymer that forms the heat-sealable resin layer, any one may be used as long as the adhesive properties of sealant can be sufficiently exerted. Polyethylene resins such as HDPE, LDPE or LLDPE, a polypropylene resin, an ethylene-vinyl acetate copolymer, an ethylene-α-olefin random copolymer, an ionomer resin, and the like can be used. Among these, LLDPE or a polypropylene resin that has high versatility is particularly preferable from the viewpoint of durability, sealing strength, and price and the like. The thickness of the sealant layer is preferably 20 to 100 µm, still more preferably 30 to 90 µm, more preferably 40 to 80 µm. When the thickness is less than 20 µm, sufficient sealing strength cannot be obtained, and the laminated body may have no tough feeling, resulting in difficult handling. Meanwhile, when the thickness is more than 100 µm, the laminated body has high tough feeling, has deteriorated handleability as a bag, and may be expensive.

### [Adhesive Layer]

For the adhesive layer used in the present invention, a general-purpose adhesive for lamination can be used. For example, it is possible to used solvent (free) type, aqueous type, and hot melt type adhesives containing poly(ester) urethane-based materials, polyester-based materials, polyamide-based materials, epoxy-based materials, poly (meth)acrylic-based materials, polyethyleneimine-based materials, ethylene-(meth)acrylic acid-based materials, polyvinyl acetate-based materials, (modified) polyolefin-based materials, polybutadiene-based materials, wax-based materials, casein-based materials and the like as a main component. Among these, urethane-based or polyester-based materials are preferable in consideration of moisture and heat resistance that can withstand retorting treatment and flexibility that can follow the dimensional changes of each base material. As a method for laminating the adhesive layer, for example, the adhesive layer can be applied by a direct gravure coating method, a reverse gravure coating method, a kiss coating method, a die coating method, a roll coating method, a dip coating method, a knife coating method, a spray coating method, a fountain coating method, and other methods. The applied amount after drying is preferably 1 to 8 g/m² in order to exert sufficient adhesive properties after moist-heat treatment. The applied amount is more preferably 2 to 7 g/m², still more preferably 3 to 6 g/m². When the applied amount is less than 1 g/m², it is difficult to paste the entire surface and the adhesive strength decreases. When the applied amount is more than 8 g/m², it takes time to completely cure the film, unreacted substances are likely to remain, and the adhesive strength decreases.

Furthermore, in the layered film of the present invention, at least one or more printed layers, other plastic substrates and/or paper substrates may be laminated between the inorganic thin film layer or substrate film layer and the heat-sealable resin layer, or outside thereof.

As a printing ink for forming the printed layer, an aqueous and solvent-based resin-containing printing ink can be preferably used. Examples of the resin used in the printing ink include an acrylic resin, a urethane-based resin, a polyester-based resin, a vinyl chloride-based resin, a vinyl acetate copolymer resin, and a mixture thereof. The printing ink may contain known additives such as an anti-static agent, a light blocking agent, an ultraviolet absorber, a plasticizer, a lubricant, a filler, a coloring agent, a stabilizer, a lubricating agent, a defoaming agent, a crosslinking agent, an anti-blocking agent, and an oxidation inhibitor. The printing method for providing the printed layer is not particularly limited, and known printing methods such as an offset printing method, a gravure printing method, and a screen printing method can be used. In order to dry the solvent after printing, known drying methods such as hot air drying, hot roll drying, and infrared drying can be used.

The oxygen transmission rate of the layered body of the present invention at 23°C and 65% RH is preferably 10 ml/m²·d·MPa or less from the viewpoint of exerting favorable gas barrier properties. The oxygen transmission rate can be set to preferably 9 ml/m²·d·MPa or less, more preferably 8 ml/m²·d·MPa or less by controlling the above-mentioned inorganic thin film layer components/attached amount. When the oxygen transmission rate is more than 10 ml/m²·d·MPa, it is difficult to cope with uses required to exhibit high gas barrier properties. Meanwhile, it is not preferable that the oxygen transmission rates before and after retorting are both less than 1 ml/m²·d·MPa since barrier performance is excellent, but the residual solvent is less likely to permeate to the outside of the bag, and the amount of the residual solvent transferred to the contents may relatively increases. A preferable lower limit of the oxygen transmission rate is 1 ml/m²·d·MPa or more.

It is preferable that the water vapor transmission rate of the layered film of the present invention at 40°C and 90% RH is 1.5 g/m²·d or less regardless of the transmission direction from the viewpoint of exerting favorable gas barrier properties. The water vapor transmission rate can be set to preferably 1.2 g/m²·d or less, more preferably 1.0 g/m²·d or les by controlling the above-mentioned inorganic thin film layer components/attached amount. When the water vapor transmission rate is more than 1.5 g/m²·d, it is difficult to cope with uses required to exhibit high gas barrier properties. Meanwhile, it is not preferable that the water vapor transmission rate is less than 0.1 g/m²·d since barrier performance is excellent, but the residual solvent is less likely to permeate to the outside of the bag, and the amount of the residual solvent transferred to the contents may relatively increases A preferable lower limit of the water vapor transmission rate is 0.1 g/m²·d or more.

With regard to the water vapor transmission rate of the layered film of the present invention at 40°C and 90% RH, the ratio B/A of the water vapor transmission rate B when water vapor permeates from the protective layer side to the water vapor transmission rate A when water vapor permeates from the substrate film side is 2.0 or less. By setting the ratio B/A to the above range, the barrier anisotropy is diminished and the barrier performance can be exerted on both surfaces. The ratio B/A is more preferably 1.8 or less, still more preferably 1.6 or less. When the above range is more than 2.0, the barrier performance is biased and the contents may not be protected sufficiently depending on the use.

In the layered film of the present invention, the ratio (P2/P1) of the peak intensity (P2) having the absorption maximum in a region of 1530 ± 10 cm⁻¹ on the protective layer surface after the layered film is immersed in hot water at 95°C for 10 minutes and then tape is pasted to the protective layer surface and peeled off to the peak intensity (P1) having the absorption maximum in a region of 1530 ± 10 cm⁻¹ in the total reflection infrared absorption spectrum of the protective layer is 0.7 or more. The peak at 1530 ± 10 cm⁻¹ is the NH bending vibration peak derived from the urethane group, and serves as an indicator of the amount of urethane or urea bonds in the protective layer. A larger peak ratio (P2/P1) means that a larger amount of the urethane component in the protective layer remains on the film after the moist-heat treatment as well, that is, the moist-heat resistance of the protective layer is superior. By this feature, the layered film exhibits practical moist-heat resistance, and the range of uses to which the layered film can be applied is widened. A preferable range of the peak ratio (P2/P1) is 0.75 or more, more preferably 0.8 or more, still more preferably 0.85 or more. When the peak ratio is less than 0.7, the adhesive strength of the protective layer may decrease during moist-heat treatment such as hot pack, and delamination and deterioration of gas barrier properties may occur.

In the layered film of the present invention, the ratio (P2/P1) of the peak intensity (P2) having the absorption maximum in a region of 1530 ± 10 cm⁻¹ on the protective layer surface after the layered film is immersed in 99% ethanol for 1 hour and then tape is pasted to the protective layer surface and peeled off to the peak intensity (P1) having the absorption maximum in a region of 1530 ± 10 cm⁻¹ in the total reflection infrared absorption spectrum of the protective layer is 0.7 or more. A larger peak ratio (P2/P1) means that a larger amount of the urethane component in the protective layer remains on the film after the moist-heat treatment as well, that is, the solvent resistance of the protective layer is superior. By this feature, the layered film exhibits practical solvent resistance, and the range of uses to which the layered film can be applied is widened. A preferable range of the peak ratio (P2/P1) is 0.75 or more, more preferably 0.8 or more, still more preferably 0.85 or more. When the peak ratio is less than 0.7, the adhesive strength of the protective layer may decrease when ethanol is filled/stored as the content, and delamination and deterioration of gas barrier properties may occur.

The lamination strength of the laminated body of the present invention at 23°C and 65% RH is preferably 1.0 N/15 mm or more, more preferably 1.2 N/15 mm or more, still more preferably 1.5 N/15 mm or more. When the lamination strength is less than 1.0 N/15 mm, peeling occurs by bending load and the like, and barrier properties may deteriorate or the contents may leak out. Furthermore, the hand-cutting properties may also deteriorate.

The lamination strength of the laminated body of the present invention after being immersed in hot water at 95°C for 2 hours is preferably 1.0 N/15 mm or less, more preferably 0.9 N/15 mm or less, still more preferably 0.8 N/15 mm or less. When the lamination strength is more than 1.0 N/15 mm, it is difficult to easily peel off the layered film from the laminated body, and there is a concern that the layered film is poor in recyclability. By raising the temperature at the time of immersion or increasing the immersion time, a further decrease in lamination strength can be expected, and the layered film can be more easily peeled off.

A preferable immersion time for peeling off the laminated body in the present invention is 1 to 4 hours. The immersion time is more preferably 1.5 to 3.5 hours, still more preferably 2 to 3 hours. When the immersion time is less than 1 hour, hot water may not sufficiently permeate the layered body and the layered film may not be easily peeled off. Meanwhile, when the immersion time is more than 4 hours, the treatment time is too long, and the method cannot be said to be effective in terms of efficiency.

As described above, the layered film of the present invention can provide a film, which is excellent in moist-heat resistance, alcohol resistance, formed film collectability, and barrier anisotropy, and is excellent in recyclability so that the layered film and the sealant layer can be easily peeled off from the laminated body.

### EXAMPLES

Next, the present invention will be described in more detail by way of Examples, but the present invention is not limited to the following examples. The evaluation of films was performed by the following measurement methods.

### (1) Intrinsic viscosity (IV) of raw material resin and resin constituting film

A sample was vacuum-dried at 130°C all day and all night, and then pulverized or cut. 80 mg of the obtained sample was accurately weighed, and heat-dissolved at 80°C for 30 minutes in a mixed solution of phenol/tetrachloroethane=60/40 (volume ratio). The solution was heat-dissolved at 80°C, and then cooled to normal temperature. The mixed solvent prepared at the proportion was charged in a measuring flask to adjust the total volume to 20 ml, followed by measurement at 30°C (unit: dI/g). An Ostwald viscometer was used to measure the intrinsic viscosity.

### (2) Content rates of terephthalic acid and isophthalic acid components contained in raw material polyester and polyester constituting film

A sample solution was prepared by dissolving a raw material polyester resin or a polyester film in a solvent in which chloroform D (manufactured by Euriso-Top Co., Ltd.) and trifluoroacetic acid D1 (manufactured by Euriso-Top Co., Ltd.) were mixed at 10:1 (volume ratio). Then, NMR of protons in the prepared sample solution was measured using an NMR apparatus (nuclear magnetic resonance analyzer: GEMINI-200 manufactured by Varian) under the measurement conditions of a temperature of 23°C and an integration number of 64. In the NMR measurement, the peak intensity of a predetermined proton was calculated, and the content rates (mol%) of the terephthalic acid component and the isophthalic acid component in 100 mol% of the acid components were calculated.

### (3) Thickness of substrate film

The thickness of substrate film was measured using a dial gauge in conformity with JIS K7130-1999 method A.

### (4) Collectability of substrate film (observation of appearance after film reformation)

The obtained substrate film was pulverized, melted at about 300°C, and formed into chips using an extruder. The obtained chips were then subjected to film formation to fabricate a film. The coloration of this film and the presence or absence of foreign substances were compared with those of a substrate film (without a covering layer) before collection and film formation to evaluate the collectability.
Favorable: The coloration is comparable to that of the film before collection and there is no foreign substance.
Acceptable: The film is slightly colored or there are some foreign substances.
Poor: The film is greatly colored, or there are a large amount of foreign substances, and the film is impractical.

### (5) Composition/film thickness of inorganic thin film layer

The film thickness and composition of the layered film (after lamination of a thin film) obtained in each of Examples and Comparative Examples were measured by a calibration curve prepared in advance using an X-ray fluorescence analyzer ("ZSX 100e" manufactured by Rigaku Corporation). The conditions of x-ray excitation tube were set to 50 kV and 70 mA.

### (6) Attached amount of covering layer/protective layer

In each of Examples and Comparative Examples, each layered film obtained at the stage of laminating covering layer/protective layer on a substrate film was used as a sample, and a test piece of 100 mm × 100 mm was cut out from this sample. The covering layer/protective layer were wiped off with dimethylformamide, and the attached amount was calculated from the mass change of the film after wiping.

### (7) Method for measuring total reflection infrared absorption spectrum of protective layer

In each of Examples and Comparative Examples, the total reflection infrared absorption spectrum of the protective layer surface of each single layered film obtained at the stage of laminating a protective layer on a substrate film was measured by total reflection absorption infrared spectroscopy, the peak intensity A having an absorption maximum in the region of 1530 ± 10 cm⁻¹ and the peak intensity B having an absorption maximum in the region of 1410 ± 10 cm⁻¹ were determined, and the intensity ratio (A/B) thereof was calculated as the peak intensity P1. The peak intensity B at 1410 ± 10 cm⁻¹ was a peak derived from the polyester substrate film and used as a reference peak when quantification of the intensity was performed. The intensity of each peak was calculated from the peak height obtained by vertically connecting the base line with zero absorbance and the top of each peak. The same measurement was performed after the tape peeling test described later, and the intensity ratio was calculated as the peak intensity P2. After that, P2/P1 was determined.

### (Measurement conditions)

Instrument: "ALPHA ECO-ATR" manufactured by Bruker Optics Co., Ltd.
Optical crystal: Ge
Incident angle: 45°
Resolution: 8 cm⁻¹
Accumulated times: 64 times

### (8) Tape peeling test after immersion in hot water

In each of Examples and Comparative Examples, each layered film obtained at the stage of laminating a protective layer on a substrate film was used as a sample, and a test piece of 50 mm × 50 mm was cut out from this sample and immersed in hot water at 95°C for 10 minutes using a water bath. After that, the sample was taken out, and water on the film was wiped off with Kimtowel. After that, a 20 mm piece of cellophane tape (Oji Tac Co., Ltd., 12 mm width, red) was pasted on the surface of the sample on the protective layer side, and closely bonded by hand. After that, the film was held down with one hand, and the tape was vigorously pulled upward at 90° with the other hand. The above-described total infrared absorption spectrum measurement was performed on the sample surface after peeling off. As a qualitative evaluation, the sample surface after peeling off was visually observed, and it was evaluated as Poor when the protective layer was peeled off by 90% or more of the tape-bonded area, Acceptable when the protective layer was peeled off by 30% to 50% of the tape-bonded area, and Favorable when the protective layer was not peeled off.

### (9) Tape peeling test after immersion in ethanol

In each of Examples and Comparative Examples, each layered film obtained at the stage of laminating a protective layer on a substrate film was used as a sample, and a test piece of 50 mm × 50 mm was cut out from this sample, and the sample was placed in a glass bottle containing 99% ethanol in an atmosphere of 23°C and 65% RH and immersed for 1 hour. After that, the sample was taken out, and ethanol on the film was wiped off with Kimtowel. After that, a 20 mm piece of cellophane tape (Oji Tac Co., Ltd., 12 mm width, red) was pasted on the surface of the sample on the protective layer side, and closely bonded by hand. After that, the film was held down with one hand, and the tape was vigorously pulled upward at 90° with the other hand. The above-described total infrared absorption spectrum measurement was performed on the sample surface after peeling off. As a qualitative evaluation, the sample surface after peeling off was visually observed, and it was evaluated as Poor when the protective layer was peeled off by 90% or more of the tape-bonded area, Acceptable when the protective layer was peeled off by 30% to 50% of the tape-bonded area, and Favorable when the protective layer was not peeled off.

### (10) Method for evaluating oxygen transmission rate

The normal oxygen transmission rate of the layered films obtained in Examples and Comparative Examples was measured in an atmosphere having a temperature of 23°C and a humidity of 65% RH in conformity with JIS-K7126 B method using an oxygen transmission rate analyzer ("OX-TRAN (registered trademark) 1/50" manufactured by AMETEK MOCON). The oxygen transmission rate was measured in the direction in which oxygen permeated from the substrate film side to the protective layer side.

### (11) Method for evaluating water vapor transmission rate

The normal water vapor transmission rate of the layered films obtained in Examples and Comparative Examples was measured in an atmosphere having a temperature of 40°C and a humidity of 90% RH in conformity with JIS-K7129 B method using a water vapor transmission rate analyzer ("PERMATRAN-W3/33MG" manufactured by AMETEK MOCON). The water vapor transmission rate was measured in the direction in which water vapor permeated from the protective layer side toward the substrate film side or in the direction in which water vapor permeated from the substrate film side toward the protective layer side.

### [Fabrication of laminated body]

A polyurethane-based adhesive (TM569/cat 10 L manufactured by Toyo-Morton, Ltd.) was applied to the protective layer surface of each of the layered films obtained in Examples and Comparative Examples so that the thickness after drying at 80°C was 3 µm. An unstretched polypropylene film (P1128 manufactured by TOYOBO CO., LTD.; thickness 30 µm; referred to as CPP) was then dry-laminated thereon on a metal roll heated to 60°C, and aging was performed at 40°C for 4 days, thereby obtaining a gas barrier laminated body for evaluation (hereinafter, also referred to as "laminated body").

### (12) Method for evaluating lamination strength

The laminated body fabricated above was cut into a test piece having a width of 15 mm and a length of 200 mm, and the lamination strength (before treatment) was measured using a Tensilon universal material testing machine ("Tensilon UMT-II-500 type" manufactured by Toyo Baldwin Co., Ltd.) at a temperature of 23°C and a relative humidity of 65%. As the measurement of lamination strength, the strength was measured when the layered film layer and heat-sealable resin layer of each of the layered films obtained in Examples and Comparative Examples were peeled off from each other at a peeling angle of 90 degrees at a tension speed of 200 mm/min.

### (13) Method for evaluating lamination strength after immersion in hot water

The laminated body fabricated above was held in hot water at 95°C for 2 hours for moist-heat treatment and cut into a test piece having a width of 15 mm and a length of 200 mm in an undried state. The lamination strength (after moist-heat treatment retorting) was measured using a Tensilon universal material testing machine ("Tensilon UMT-II-500 type" manufactured by Toyo Baldwin Co., Ltd.) at a temperature of 23°C and a relative humidity of 65%. As the lamination strength, the strength when water was attached between the layered film and the heat-sealable resin layer and the layered film and the heat-sealable resin layer were peeled off from each other at a peeling angle of 90 degrees at a tension speed of 200 mm/min was taken.

### (14) Easy peelability evaluation

When the laminated body immersed under the conditions of (12) was peeled off, a sample in which the layered film and the sealant were easily peeled off by hand was evaluated as Favorable, and a sample in which the layered film and the sealant were not peeled off was evaluated as Poor.

The details of the coating liquids used in the present Examples and Comparative Examples are described below. The coating liquids were used in Examples 1 to 6 and Comparative Examples 1 to 6 and presented in Table 1.

### [Resin (A) having oxazoline group]

As the resin having an oxazoline group, a commercially available water-soluble oxazoline group-containing acrylate ("EPOCROS (registered trademark) WS-300" manufactured by Nippon Shokubai Co., Ltd.; solid content 10%) was prepared. The oxazoline group amount in this resin was 7.7 mmol/g.

### [Acrylic resin (B)]

As the acrylic resin, a commercially available 25% by mass emulsion of acrylic ester copolymer ("MOVINYL (registered trademark) 7980" manufactured by Nichigo-Movinyl Co. Ltd.) was prepared.

### [Urethane resin (C)]

As the urethane resin, a commercially available polyester urethane resin dispersion ("TAKELAC (registered trademark) W605" manufactured by Mitsui Chemicals, Inc.; solid content 30%) was prepared. The glass transition temperature (Tg) measured by DSC was 100°C. The proportion of aromatic or araliphatic diisocyanates to the total isocyanate components measured by ¹H-NMR was 55 mol%.

### [Urethane resin (D)]

As the urethane resin, a commercially available polyester urethane resin dispersion ("AP201" manufactured by DIC; solid content 23%) was prepared. The glass transition temperature (Tg) measured by DSC was 10°C. The proportion of aromatic or araliphatic diisocyanates to the total isocyanate components measured by ¹H-NMR was 100 mol%.

### [Urethane resin (E-1)]

In a four-necked flask equipped with a stirrer, a Dimroth condenser, a nitrogen inlet tube, a silica gel drying tube, and a thermometer, 143.95 parts by mass of meta-xylylene diisocyanate, 25.09 parts by mass of 4,4'-methylenebis(cyclohexyl isocyanate), 28.61 parts by mass of ethylene glycol, 5.50 parts by mass of trimethylolpropane, 12.37 parts by mass of dimethylolpropionic acid, and 120.97 parts by mass of methyl ethyl ketone as a solvent were mixed together, and stirred at 70°C in a nitrogen atmosphere, and it was confirmed that the reaction liquid reached the predetermined amine equivalent. Next, the reaction liquid was cooled to 35°C, and then 9.14 parts by mass of triethylamine was added to obtain a polyurethane prepolymer solution. Next, 794.97 parts by mass of water was added to a reaction vessel equipped with a homodisper capable of high-speed stirring, the temperature was adjusted to 15°C, the polyurethane prepolymer solution was added while stirring and mixing was performed at 2000 min⁻¹, and water dispersion was performed. An aqueous amine solution prepared by mixing 22.96 parts by mass of 2-[(2-aminoethyl)amino]ethanol and 91.84 parts by mass of water was added. Next, an aqueous amine solution prepared by mixing 2.38 parts by mass of N-2-(aminoethyl)-3-aminopropyltrimethoxysilane (trade name; KBM-603, manufactured by Shin-Etsu Chemical Co., Ltd.) and 9.50 parts by mass of water was added, and a chain elongation reaction was conducted. Thereafter, methyl ethyl ketone and a part of water were removed under reduced pressure to obtain a polyurethane resin (E-1)-containing dispersion having a solid content of 25% by mass and an average particle size of 70 nm. The obtained polyurethane resin (E-1) had a Si content (according to charged amount calculation) of 1200 mg/1 kg and a meta-xylylene group content (according to charged amount calculation) of 32% by mass.

### [Urethane resin (E-2)]

In a four-necked flask equipped with a stirrer, a Dimroth condenser, a nitrogen inlet tube, a silica gel drying tube, and a thermometer, 144.69 parts by mass of meta-xylylene diisocyanate, 25.21 parts by mass of 4,4'-methylenebis(cyclohexyl isocyanate), 28.76 parts by mass of ethylene glycol, 5.53 parts by mass of trimethylolpropane, 12.43 parts by mass of dimethylolpropionic acid, and 121.59 parts by mass of methyl ethyl ketone as a solvent were mixed together, and stirred at 70°C in a nitrogen atmosphere, and it was confirmed that the reaction liquid reached the predetermined amine equivalent. Next, the reaction liquid was cooled to 35°C, and then 9.19 parts by mass of triethylamine was added to obtain a polyurethane prepolymer solution. Next, 799.00 parts by mass of water was added to a reaction vessel equipped with a homodisper capable of high-speed stirring, the temperature was adjusted to 15°C, the polyurethane prepolymer solution was added while stirring and mixing was performed at 2000 min⁻¹, and water dispersion was performed. An aqueous amine solution prepared by mixing 24.19 parts by mass of 2-[(2-aminoethyl)amino]ethanol and 96.78 parts by mass of water was added, and a chain elongation reaction was conducted. Thereafter, methyl ethyl ketone and a part of water were removed under reduced pressure to obtain a polyurethane resin (E-2)-containing dispersion having a solid content of 25% by mass and an average particle size of 70 nm. The obtained polyurethane resin (E-2) had a Si content (according to charged amount calculation) of 0 mg/1 kg and a meta-xylylene group content (according to charged amount calculation) of 32% by mass.

### [Urethane resin (E-3)]

In a four-necked flask equipped with a stirrer, a Dimroth condenser, a nitrogen inlet tube, a silica gel drying tube, and a thermometer, 55.12 parts by mass of 1,3-bis(isocyanatomethyl)cyclohexane), 6.11 parts by mass of triethylene glycol, 162.75 parts by mass of polytetramethylene ether glycol having a number average molecular weight of 2000, 8.19 parts by mass of dimethylolpropionic acid, and 102.15 parts by mass of methyl ethyl ketone as a solvent were mixed together, and stirred at 70°C in a nitrogen atmosphere, and it was confirmed that the reaction liquid reached the predetermined amine equivalent. Next, the reaction liquid was cooled to 35°C, and then 6.18 parts by mass of triethylamine was added to obtain a polyurethane prepolymer solution. Next, 783.15 parts by mass of water was added to a reaction vessel equipped with a homodisper capable of high-speed stirring, the temperature was adjusted to 15°C, the polyurethane prepolymer solution was added while stirring and mixing was performed at 2000 min⁻¹, and water dispersion was performed. An aqueous amine solution prepared by mixing 7.49 parts by mass of 2-[(2-aminoethyl)amino]ethanol and 29.97 parts by mass of water was added. Next, an aqueous amine solution prepared by mixing 4.16 parts by mass of N-2-(aminoethyl)-3-aminopropyltrimethoxysilane (trade name; KBM-603, manufactured by Shin-Etsu Chemical Co., Ltd.) and 16.63 parts by mass of water was added, and a chain elongation reaction was conducted. Thereafter, methyl ethyl ketone and a part of water were removed under reduced pressure to obtain a polyurethane resin (E-3)-containing dispersion having a solid content of 25% by mass and an average particle size of 60 nm. The obtained polyurethane resin (E-3) had a Si content (according to charged amount calculation) of 2100 mg/1 kg and a meta-xylylene group content (according to charged amount calculation) of 0% by mass.

### [Urethane resin (E-4)]

In a four-necked flask equipped with a stirrer, a Dimroth condenser, a nitrogen inlet tube, a silica gel drying tube, and a thermometer, 112.93 parts by mass of meta-xylylene diisocyanate, 58.81 parts by mass of 4,4'-methylenebis(cyclohexyl isocyanate), 27.19 parts by mass of ethylene glycol, 5.22 parts by mass of trimethylolpropane, 12.38 parts by mass of dimethylolpropionic acid, and 121.52 parts by mass of methyl ethyl ketone as a solvent were mixed together, and stirred at 70°C in a nitrogen atmosphere, and it was confirmed that the reaction liquid reached the predetermined amine equivalent. Next, the reaction liquid was cooled to 35°C, and then 9.15 parts by mass of triethylamine was added to obtain a polyurethane prepolymer solution. Next, 797.80 parts by mass of water was added to a reaction vessel equipped with a homodisper capable of high-speed stirring, the temperature was adjusted to 15°C, the polyurethane prepolymer solution was added while stirring and mixing was performed at 2000 min⁻¹, and water dispersion was performed. An aqueous amine solution prepared by mixing 21.94 parts by mass of 2-[(2-aminoethyl)amino]ethanol and 87.77 parts by mass of water was added. Next, an aqueous amine solution prepared by mixing 2.38 parts by mass of N-2-(aminoethyl)-3-aminopropyltrimethoxysilane (trade name; KBM-603, manufactured by Shin-Etsu Chemical Co., Ltd.) and 9.50 parts by mass of water was added, and a chain elongation reaction was conducted. Thereafter, methyl ethyl ketone and a part of water were removed under reduced pressure to obtain a polyurethane resin (E-4)-containing dispersion having a solid content of 25% by mass and an average particle size of 60 nm. The obtained polyurethane resin (E-4) had a Si content (according to charged amount calculation) of 1200 mg/1 kg and a meta-xylylene group content (according to charged amount calculation) of 25% by mass.

### [Gas barrier vinyl alcohol-based resin (F)]

As a vinyl alcohol-based resin having gas barrier properties, a commercially available water-soluble vinyl alcohol resin ("Nichigo G-Polymer (registered trademark) OKS-8049" manufactured by Nippon Synthetic Chemical Industry Co., Ltd.; powder) was dissolved in water to prepare an aqueous solution having a solid content of 5%.

### [Gas barrier protective layer solution (G: coating liquid 8)]

A solution obtained by hydrolyzing tetraethoxysilane with 0.02 mol/L of hydrochloric acid was added to a 5%-by-weight aqueous solution of a polyvinyl alcohol resin (PVA) having a saponification degree of 99% and a polymerization degree of 2400 at a proportion of SiO₂/PVA = 60/40 as a weight ratio, thereby obtaining a gas barrier protective layer solution (G: coating liquid 8).

### [Coating liquid 1 used for covering layer]

The respective materials were mixed together at the following blending ratio to prepare a coating liquid (resin composition for covering layer).

| | |
|---|---|
| Water | 54.40% by mass |
| Isopropanol | 25.00% by mass |
| Oxazoline group-containing resin (A) | 15.00% by mass |
| Acrylic resin (B) | 3.60% by mass |
| Urethane resin (C) | 2.00% by mass |

### [Coating liquid 2 used for covering layer]

The respective materials were mixed together at the following blending ratio to prepare a coating liquid (resin composition for covering layer).

| | |
|---|---|
| Water | 61.96% by mass |
| Isopropanol | 25.00% by mass |
| Urethane resin (D) | 13.04% by mass |

### [Coating liquid 3 used for coating protective layer]

The following coating agents were mixed together to prepare a coating liquid 3.

| | |
|---|---|
| Water | 30.00% by mass |
| Isopropanol | 30.00% by mass |
| Urethane resin (E-1) | 40.00% by mass |

### [Coating liquid 4 used for coating protective layer]

The following coating agents were mixed together to prepare a coating liquid 4.

| | |
|---|---|
| Water | 30.00% by mass |
| Isopropanol | 30.00% by mass |
| Urethane resin (E-4) | 40.00% by mass |

### [Coating liquid 5 used for coating protective layer]

The following coating agents were mixed together to prepare a coating liquid 5.

| | |
|---|---|
| Water | 30.00% by mass |
| Isopropanol | 30.00% by mass |
| Urethane resin (E-2) | 40.00% by mass |

### [Coating liquid 6 used for coating protective layer]

The following coating agents were mixed together to prepare a coating liquid 6.

| | |
|---|---|
| Water | 30.00% by mass |
| Isopropanol | 30.00% by mass |
| Urethane resin (E-2) | 17.20% by mass |
| Urethane resin (E-3) | 22.80% by mass |

### [Coating liquid 7 used for coating protective layer]

The following coating agents were mixed together to prepare a coating liquid 7.

| | |
|---|---|
| Water | 20.00% by mass |
| Isopropanol | 10.00% by mass |
| Gas barrier vinyl alcohol-based resin (F) | 70.00% by |

mass

The method for fabricating the substrate film used in each of Examples and Comparative Examples will be described below. The coating liquids were used in Examples 1 to 6 and Comparative Examples 1 to 6 and presented in Table 1.

### (Fabrication of substrate film (without covering layer))

A polyethylene terephthalate resin having an intrinsic viscosity of 0.62 dl/g (30°C, phenol/tetrachloroethane = 60/40) was pre-crystallized, then dried, extruded at 280°C using an extruder equipped with a T-die, and rapidly cooled and solidified on a drum having a surface temperature of 40°C to obtain an amorphous sheet. Next, the obtained sheet was stretched between a heating roll and a cooling roll 4.0 times at 100°C in the machine direction. The obtained uniaxially stretched film was guided to a tenter, preheated at 100°C, stretched 4.0 times at 120°C in the transverse direction, and subjected to a heat treatment at 225°C while being subjected to 6% relaxation in the transverse direction to obtain a biaxially stretched polyester film having a thickness of 12 µm.

### (Fabrication of substrate film (with covering layer))

A polyethylene terephthalate resin having an intrinsic viscosity of 0.62 dl/g (30°C, phenol/tetrachloroethane = 60/40) was pre-crystallized, then dried, extruded at 280°C using an extruder equipped with a T-die, and rapidly cooled and solidified on a drum having a surface temperature of 40°C to obtain an amorphous sheet. Next, the obtained sheet was stretched between a heating roll and a cooling roll 4.0 times at 100°C in the machine direction. One surface of the obtained uniaxially stretched film was then coated with the coating liquid 1 or coating liquid 2 by a fountain bar coating method. The film was guided to a tenter while being dried, preheated at 100°C, stretched 4.0 times at 120°C in the transverse direction, and subjected to a heat treatment at 225°C while being subjected to 6% relaxation in the transverse direction to obtain a substrate film in which a covering layer of 0.050 g/m² was formed on a biaxially stretched polyester film having a thickness of 12 µm.

Hereinafter, a method for fabricating the inorganic thin film layer used in each of Examples and Comparative Examples will be described. The coating liquids were used in Examples 1 to 6 and Comparative Examples 1 to 6 and presented in Table 1.

### (Formation of inorganic thin film layer M-1)

As an inorganic thin film layer M-1, aluminum oxide was vapor-deposited on the substrate film layer. As the method for vapor-depositing aluminum oxide on the substrate film layer, a film is set on the unwinding side of a continuous vacuum vapor-deposition machine and run through a cooling metal drum to wind up the film. At this time, the continuous vacuum vapor-deposition machine was evacuated to 10⁻⁴ Torr or less, metal aluminum with a purity of 99.99% was charged into an alumina crucible from the bottom of the cooling drum, and heated and evaporated, oxygen was supplied to the vapor of metal aluminum, and the vapor was attached and deposited on the film while undergoing an oxidation reaction, thereby forming an aluminum oxide film having a thickness of 10 nm.

### (Formation of inorganic thin film layer M-2)

As an inorganic thin film layer M-2, a composite oxide layer composed of silicon dioxide and aluminum oxide was formed on the substrate film layer by an electron beam vapor-deposition method. Particulate SiO₂ (purity 99.9 %) and A1₂O₃ (purity 99.9%) having a size of about 3 mm to 5 mm were used as a vapor-deposition source. The film thickness of the inorganic thin film layer (SiO₂/A1₂O₃ composite oxide layer) in the film (inorganic thin film layer/covering layer-containing film) obtained as described above was 13 nm. The composition of the composite oxide layer was SiO₂/A1₂O₃ (mass ratio) = 60/40.

Hereinafter, a method for laminating the protective layer used in each of Examples and Comparative Examples will be described. The coating liquids were used in Examples 1 to 6 and Comparative Examples 1 to 6 and presented in Table 1.

### (Coating of coating liquid on vapor-deposition film (lamination of protective layer))

The coating liquid prepared above was applied onto the inorganic thin film layer of the obtained vapor-deposition film by a gravure roll coating method, pre-dried at 110°C, and then dried at 190°C to obtain a protective layer. The applied amount after drying was 0.30 g/m² (Dry). After that, post-heating was performed at 40°C for 2 days. The coating liquid constituting the protective layer was changed in each of Examples and Comparative Examples as presented in Table 1.

As described above, a layered film including (covering layer)/inorganic thin film layer/protective layer on a substrate film was fabricated and evaluated. A laminated body was fabricated using the obtained layered film and evaluated. The results are presented in Table 1.

**[Table 1A]**

| | Substrate film | | | | Inorganic thin film layer | | Protective layer | | | |
|---|---|---|---|---|---|---|---|---|---|---|
| | Material | Thickness [µm] | Covering layer | | | | | | | |
| | | | Kind | Amount attached [g/m2] | Kind | Thickness [nm] | Kind | Amount attached [g/m2] | Amount of Si [mg/kg] | Meta-xylylene group [% by mass] |
| Example 1 | PET | 12 | - | - | M-2 | 13 | Coating liquid 3 | 0.20 | 1200 | 32 |
| Example 2 | PET | 12 | - | - | M-2 | 13 | Coating liquid 3 | 0.30 | 1200 | 32 |
| Example 3 | PET | 12 | - | - | M-2 | 13 | Coating liquid 3 | 0.50 | 1200 | 32 |
| Example 4 | PET | 12 | - | - | M-1 | 10 | Coating liquid 3 | 0.30 | 1200 | 32 |
| Example 5 | PET | 12 | - | - | M-2 | 13 | Coating liquid 4 | 0.30 | 1200 | 25 |
| Example 6 | PET | 12 | - | - | M-2 | 13 | Coating liquid 6 | 0.30 | 1200 | 14 |
| Comparative Example 1 | PET | 12 | Coating liquid 1 | 0.03 | M-2 | 13 | Coating liquid 3 | 0.30 | 1200 | 32 |
| Comparative Example 2 | PET | 12 | Coating liquid 2 | 0.03 | M-2 | 13 | Coating liquid 3 | 0.30 | 1200 | 32 |
| Comparative Example 3 | PET | 12 | - | - | M-2 | 13 | Coating liquid 5 | 0.30 | 0 | 32 |
| Comparative Example 4 | PET | 12 | - | - | M-2 | 13 | Coating liquid 2 | 0.30 | 0 | 0 |
| Comparative Example 5 | PET | 12 | - | - | M-2 | 13 | Coating liquid 7 | 0.30 | - | - |
| Comparative Example 6 | PET | 12 | - | - | M-1 | 10 | Coating liquid 8 | 0.30 | - | - |

**[Table 1B]**

| | Evaluation item | | | | | | | | | | | | |
|---|---|---|---|---|---|---|---|---|---|---|---|---|---|
| | Single layered film | | | | | | | | | Laminated body | | | |
| | | | | | | | | | | Lamination strength | | | Easy peelability |
| | | | | | | | | | | [N/15mm] | | | |
| | Oxygen transmission rate [ml/m2·day·MPa] | Water vapor transmission rate [g/m2·d] 40°C × 90%RH | | | Peeling off of tape after immersion in hot water | | Peeling off of tape after immersion in ethanol | | Collectability of substrate film | Before treatment | After immersion in hot water | | |
| | 23°C × 65%RH | A: High humidity on PET side | B: High humidity on protective layer side | B/A | IR peak intensity ratio P2/P1 | Visual judgment | IR peak intensity ratio P2/P1 | Visual judgment | | | Temperature × time [h] | Value | |
| Example 1 | 4.0 | 0.6 | 0.9 | 1.5 | 1.0 | Favorable | 1.0 | Favorable | Favorable | 2.2 | 95°C × 2h | 0.3 | Favorable |
| Example 2 | 3.0 | 0.5 | 0.7 | 1.4 | 1.0 | Favorable | 1.0 | Favorable | Favorable | 2.5 | 95°C × 2h | 0.3 | Favorable |
| Example 3 | 1.5 | 0.4 | 0.6 | 1.5 | 0.9 | Favorable | 0.9 | Favorable | Favorable | 2.3 | 95°C × 2h | 0.4 | Favorable |
| Example 4 | 4.5 | 0.6 | 1.0 | 1.7 | 0.9 | Favorable | 1.0 | Favorable | Favorable | 2.1 | 95°C × 2h | 0.1 | Favorable |
| Example 5 | 4.0 | 0.6 | 0.9 | 1.5 | 0.9 | Favorable | 1.0 | Favorable | Favorable | 2.0 | 95°C × 2h | 0.5 | Favorable |
| Example 6 | 8.0 | 1.0 | 1.4 | 1.4 | 0.8 | Favorable | 1.0 | Favorable | Favorable | 2.3 | 95°C × 2h | 0.8 | Favorable |
| Comparative Example 1 | 2.5 | 0.5 | 0.7 | 1.4 | 0.9 | Favorable | 1.0 | Favorable | Poor | 3.5 | 95°C × 2h | 3.0 | Poor |
| Comparative Example 2 | 4.0 | 0.5 | 0.7 | 1.4 | 0.9 | Favorable | 0.1 | Poor | Acceptable | 3.0 | 95°C × 2h | 3.0 | Poor |
| Comparative Example 3 | 3.2 | 0.5 | 0.9 | 1.8 | 0.1 | Poor | 0.5 | Acceptable | Favorable | 2.2 | 95°C × 2h | 0.5 | Favorable |
| Comparative Example 4 | 13.0 | 2.0 | 2.4 | 1.2 | 0.5 | Acceptable | 0.4 | Acceptable | Favorable | 0.5 | 95°C × 2h | 1.3 | Acceptable |
| Comparative Example 5 | 1.0 | 0.4 | 2.4 | 6.0 | - | Poor | - | Acceptable | Favorable | 0. 3 | 95°C × 2h | 0.3 | Favorable |
| Comparative Example 6 | 1.0 | 0.4 | 0.5 | 1.3 | - | Favorable | - | Favorable | Favorable | 3.0 | 95°C × 2h | 3.0 | Poor |

### INDUSTRIAL APPLICABILITY

According to the present invention, it is possible to provide a layered film that is excellent in moist-heat resistance, alcohol resistance, formed film collectability, and barrier anisotropy, and is excellent in recyclability so that the layered film and a sealant layer can be easily peeled off from a laminated body by fabricating a layered film including an inorganic thin film layer and a protective layer on a substrate film layer formed using a polyester resin in this order. Moreover, the layered film of the present invention does not depend on the materials and can ensure stable quality under a wide range of manufacturing conditions in processing processes such as printing and lamination as well, so is excellent in both economic efficiency and production stability, and can provide a gas barrier film with uniform properties.

## Claims

1. A layered film comprising an inorganic thin film layer on at least one surface of a substrate film and a protective layer containing a urethane resin having a meta-xylylene group on the inorganic thin layer, wherein the layered film satisfies the following requirements (a) to (d):
(a) the substrate film and the inorganic thin film layer are adjacent to each other,
(b) a ratio B/A of a water vapor transmission rate B of the protective layer when water vapor permeates from a protective layer side to a water vapor transmission rate A of the protective layer when water vapor permeates from a substrate film side at 40°C and 90% RH is 2.0 or less,
(c) a ratio (P2/P1) of a peak intensity (P2) having an absorption maximum in a region of 1530 ± 10 cm⁻¹ on a protective layer surface after the layered film is immersed in hot water at 95°C for 10 minutes and then tape is pasted to the protective layer surface and peeled off to a peak intensity (P1) having an absorption maximum in a region of 1530 ± 10 cm⁻¹ in a total reflection infrared absorption spectrum of the protective layer is 0.7 or more, and
(d) a ratio (P2/P1) of a peak intensity (P2) having an absorption maximum in a region of 1530 ± 10 cm⁻¹ on a protective layer surface after the layered film is immersed in 99% ethanol for 1 hour and then tape is pasted to the protective layer surface and peeled off to a peak intensity (P1) having an absorption maximum in a region of 1530 ± 10 cm⁻¹ in a total reflection infrared absorption spectrum of the protective layer is 0.7 or more.

2. The layered film according to claim 1, wherein an oxygen transmission rate of the layered film at 23°C and 65% RH is 10 ml/m²·d·MPa or less.

3. The layered film according to claim 1 or 2, wherein a meta-xylylene group content in the urethane resin that has a meta-xylylene group and is contained in the protective layer is 12% to 33% by mass, and an amount of silanol groups is 700 to 1700 mg per 1 kg of resin constituting the polyurethane resin as an amount of Si element contained in the silanol groups.

4. The layered film according to any one of claims 1 to 3, wherein the inorganic thin film layer is an aluminum oxide layer or a layer of a composite oxide composed of silicon oxide and aluminum oxide.

5. A laminated body obtained by laminating a sealant layer on one surface of the layered film according to any one of claims 1 to 4.

6. The laminated body according to claim 5, wherein the laminated body has a lamination strength of 1 N/15 mm or more and a water-attached lamination strength of 1 N/15 mm or less after boiling sterilization in hot water at 90°C for 2 hours.
